# EUROPÄISCHE PATENTSCHRIFT

(11) **EP 0 751 380 B1**
(45) Veröffentlichungstag und Bekanntmachung des Hinweises auf die Patenterteilung: **02.01.2003**
(21) Anmeldenummer: 96106173.6
(22) Anmeldetag: 19.04.1996
(51) Int. Cl.: G01F 23/296

(54) **Vorrichtung zur Feststellung und/oder Überwachung eines vorbestimmten Füllstands in einem Behälter**
Device for establishing and/or monitoring a predetermined filling level in a container
Dispositif pour la détermination et/ou la surveillance d'un niveau prédéterminé dans un réservoir

(30) Priorität: 28.06.1995 DE 19523461
(43) Veröffentlichungstag der Anmeldung: 02.01.1997
(73) Patentinhaber: Endress + Hauser GmbH + Co.KG., 79689 Maulburg (DE)
(72) Erfinder: Getman, Igor, 79540 Lörrach (DE); Lopatin, Sergej, 79539 Lörrach (DE)

(56) Entgegenhaltungen:
- DE-A- 3 625 779
- DE-C- 3 931 453
- PATENT ABSTRACTS OF JAPAN vol. 010, no. 065 (E-388), 14.März 1986 & JP-A-60 216699 (MATSUSHITA DENKI SANGYO KK), 30.Oktober 1985,
- PATENT ABSTRACTS OF JAPAN vol. 010, no. 075 (E-390), 25.März 1986 & JP-A-60 223300 (SUWA SEIKOSHA KK), 7.November 1985,

## Beschreibung

Die Erfindung betrifft eine Vorrichtung zur Feststellung und/oder Überwachung eines vorbestimmten Füllstandes in einem Behälter.

In der US-A 5,191,316 ist eine Vorrichtung zur Feststellung und/oder Überwachung eines vorbestimmten Füllstandes in einem Behälter beschrieben, diese umfaßt:
- ein Gehäuse,
- mindestens zwei in den Behälter ragende Schwingstäbe, die mit Abstand voneinander an der Membran befestigt sind,
- eine an ihrem Rand fest in das Gehäuse eingespannte Membran, und
- einen stapelförmigen Wandler
   -- mit mindestens einem von einer Wechselspannung erregbaren piezoelektrischen Element zur Erregung der Schwingstäbe in gegensinnige Schwingungen quer zu ihrer Längsachse und
   -- mit wenigstens einem piezoelektrischen Element zum Empfangen und Umwandeln der mechanischen Schwingungen in ein elektrisches Ausgangssignal,
      --- wobei der Wandler mittels einer auf der schwingstäbeabgewandten Seite der Membran befestigten Spannschraube unter Vorspannung der Membran befestigt ist und an beiden Enden des Stapels jeweils einen Metallring aufweist, von denen der der Membran zugewandte mit Druckzapfen versehen ist, die die von dem Wandler erzeugte Höhenänderung des Stapels auf die Membran übertragen.

Die Metallringe dienen dazu, den von der Befestigung des Stapels erzeugten Flächendruck parallel auf die piezoelektrischen Elemente zu übertragen.

Eine solche Vorrichtung weist u.a. den Nachteil auf, daß die ursprünglich erzeugte Schwingungsform, nämlich die Dickenoszillation, nicht der Schwingungsform, die zur Anregung der Schwingstäbe genutzt wird, nämlich einer Biegeschwingung, entspricht. Zur Umwandlung der Schwingungsform sind verhältnismäßig viele Bauteile nötig.

In der DE-A 36 25 779 ist eine andere Vorrichtung zur Feststellung eines vorbestimmten Füllstandes in einem Behälter beschrieben, diese umfaßt:
- ein Gehäuse, das aus einem massiven Einschraubstück mit axialer Innenbohrung und einem im Vergleich dazu dünnwandigen rohrförmigen Gehäuseabschnitt besteht,
- einen in den Behälter ragenden inneren Schwingstab,
- einen diesen koaxial umgreifenden, in den Behälter ragenden äußeren Schwingstab,
- eine an ihrem Rand in das Gehäuse eingespannte erste Membran, an der der äußere Schwingstab befestigt ist,
- eine parallel zu der ersten Membran im Inneren des Gehäuses angeordnete zweite Membran an der der innere Schwingstab befestigt ist,
- Mittel zur Anregung der zweiten Membran zu Biegeschwingungen und zum Empfangen sowie Umwandeln von deren Schwingungen in ein elektrisches Ausgangssignal,
   -- wobei die Schwingungen der zweiten Membran direkt auf den inneren Schwingstab sowie indirekt über das Gehäuse auf die erste Membran und von dieser auf den äußeren Schwingstab derart übertragen werden, daß die Schwingstäbe gegensinnige Schwingungen quer zu ihrer Längsachse ausführen.

Ein Nachteil einer solchen Vorrichtung ist, daß beide Membranen in das Gehäuse eingespannt sind. Durch diese Art der Befestigung und der mechanischen Kopplung muß zur Schwingungserregung soviel Energie zugeführt werden, daß sich praktisch der gesamte rohrförmige Gehäuseabschnitt bei jeder Schwingung mitbewegt.

Weiterhin ist es auch üblich, eine Membran mit daran angeformten Schwingstäben zu Biegeschwingungen anzuregen, indem ein piezoelektrisches Element direkt auf der Membran befestigt, z.B. aufgekelebt, wird. Eine solche Befestigung ist aber sehr empfindlich, da eine Überdehnung der Membran, z.B. durch unsachgemäßes Zusammendrücken der Schwingstäbe, dazu führt, daß das piezoelektrische Element zerstört oder zumindest die elektrische und die mechanische Verbindung zwischen piezoelektrischem Element und Membran beeinträchtigt werden. Ein Austausch des piezoelektrischen Elements ist in diesem Fall mit Aufwand verbunden.

Es ist eine Aufgabe der Erfindung, eine robuste Vorrichtung zur Feststellung und/oder Überwachung eines vorbestimmten Füllstandes in einem Behälter anzugeben, die eine direkte mechanische Kopplung zwischen den die Schwingungen erzeugenden Elementen und der Membran, an denen die Schwingstäbe befestigt sind, aufweist und bei der die durch das piezoelektrische Element erzeugte Schwingungsform der zur Anregung der Schwingstäbe genutzten Schwingungsform entspricht.

Hierzu besteht die Erfindung in einer Vorrichtung zur Feststellung und/oder Überwachung eines vorbestimmten Füllstandes in einem Behälter, welche Vorrichtung umfaßt:
- ein Gehäuse,
- zwei Schwingstäbe, welche in einen Behälter ragen können,
- eine an ihrem Rand fest in das Gehäuse eingespannte erste Membran, an der die Schwingstäbe voneinander beabstandet befestigt sind,
- eine parallel zu der ersten Membran im Inneren des Gehäuses angeordnete zweite Membran,
- am Rand und im Zentrum der zweiten Membran angeordnete Befestigungsmittel, über die die zweite Membran mit der ersten Membran direkt mechanisch gekoppelt ist,
- ein einziges auf der zweiten Membran angeordnetes, scheiben- oder ringscheibenförmiges piezoelektrisches Element zur Anregung der zweiten Membran zu Biegeschwingungen und zum Empfangen und Umwandeln von deren Schwingungen in ein elektrisches Ausgangssignal,
   -- wobei die Schwingungen der zweiten Membran über die Befestigungsmittel direkt auf die erste Membran und von dieser auf die Schwingstäbe derart übertragen werden, daß die Schwingstäbe gegensinnige Schwingungen quer zu ihrer Längsachse ausführen.

Gemäß einer vorteilhaften Ausgestaltung der Erfindung sind die Befestigungsmittel ein an die zweite Membran angeformter, auf der ersten Membran aufliegender Kopplungsring und eine im Zentrum der ersten Membran befestigte, in das Innere des Gehäuses ragende, die zweite Membran und das piezoelektrische Element durchdringende Spannschraube, mittels der und einer Mutter die zweite Membran auf der ersten Membran fixiert ist. Anstatt der Mutter kann die zweite Membran auch ein Innengewinde aufweisen, mit dem diese auf die Spannschraube geschraubt ist.

Gemäß einer anderen vorteilhaften Ausgestaltung der Erfindung sind die Befestigungsmittel ein an der zweiten Membran befindliches, in ein Innengewinde des Gehäuses geschraubtes Außengewinde und ein im Zentrum der zweiten Membran auf der der ersten Membran zugewandten Seite angeformter Stempel, wobei die zweite Membran soweit in das Gehäuse eingeschraubt ist, daß die erste Membran vorgespannt ist.

Gemäß einer weiteren Ausgestaltung der Erfindung weist das piezoelektrische Element drei Elektroden auf, von denen eine mit dem Gehäuse verbundene erste Elektrode auf einer ersten Kreis- oder Kreisringfläche des piezoelektrischen Elements, eine mit einer Wechselspannungsquelle verbundene zweite Elektrode auf einer zweiten Kreis- oder Kreisringfläche des piezoelektrischen Elements und eine der Abnahme der Ausgangssignals dienende dritte Elektrode auf der zweiten Kreis- oder Kreisringfläche des piezoelektrischen Elements angeordnet ist.

Wenn im eingebauten Zustand der Vorrichtung die Schwingstäbe mit dem Füllgut des Behälters bedeckt sind, so werden deren Schwingungen gedämpft. Es ändert sich daher die Resonanzfrequenz des Gesamtsystems und die Schwingungsamplitude der Schwingstäbe. Das elektrische Ausgangssignal wird einer Auswerte-Elektronik zugeführt. Ein Absinken der Resonanzfrequenz und/oder der Schwingungsamplitude unter einen festgesetzten Referenzwert wird von der Auswerte-Elektronik erkannt und zur Anzeige gebracht und/oder zur Auslösung eines Schaltvorgangs verwendet.

Ein Vorteil der Erfindung besteht darin, daß das piezoelektrische Element genau wie die beiden Membranen zu Biegeschwingungen angeregt wird. Eine Umwandlung von Dickenoszillationen in Biegeschwingungen entfällt.

Ein anderer Vorteil der Erfindung besteht darin, daß durch die direkte mechanische Kopplung der beiden Membranen eine verlustarme Übertragung der Schwingungsenergie erfolgt.

Ein weiterer Vorteil der Erfindung besteht darin, daß nur sehr wenig Schwingungsenergie auf das Gehäuse übertragen wird, da die erste Membran fest in das Gehäuse eingespannt ist und die Übertragung der Schwingungsenergie von der zweiten Membran auf die erste Membran nicht über das Gehäuse erfolgt.

Die Erfindung und weitere Vorteile werden nun anhand der Figuren der Zeichnung, in denen zwei Ausführungsbeispiele dargestellt sind, näher erläutert; gleiche Elemente sind in den Figuren mit gleichen Bezugszeichen versehen.
- Fig. 1: zeigt im Längsschnitt die für die Erfindung wesentlichen Teile einer Vorrichtung,
- Fig. 2: zeigt die Anordnung von Elektroden auf einem piezoelektrischen Element nach Fig. 1, und
- Fig. 3: zeigt im Längsschnitt die für die Erfindung wesentlichen Teile einer weiteren Vorrichtung.

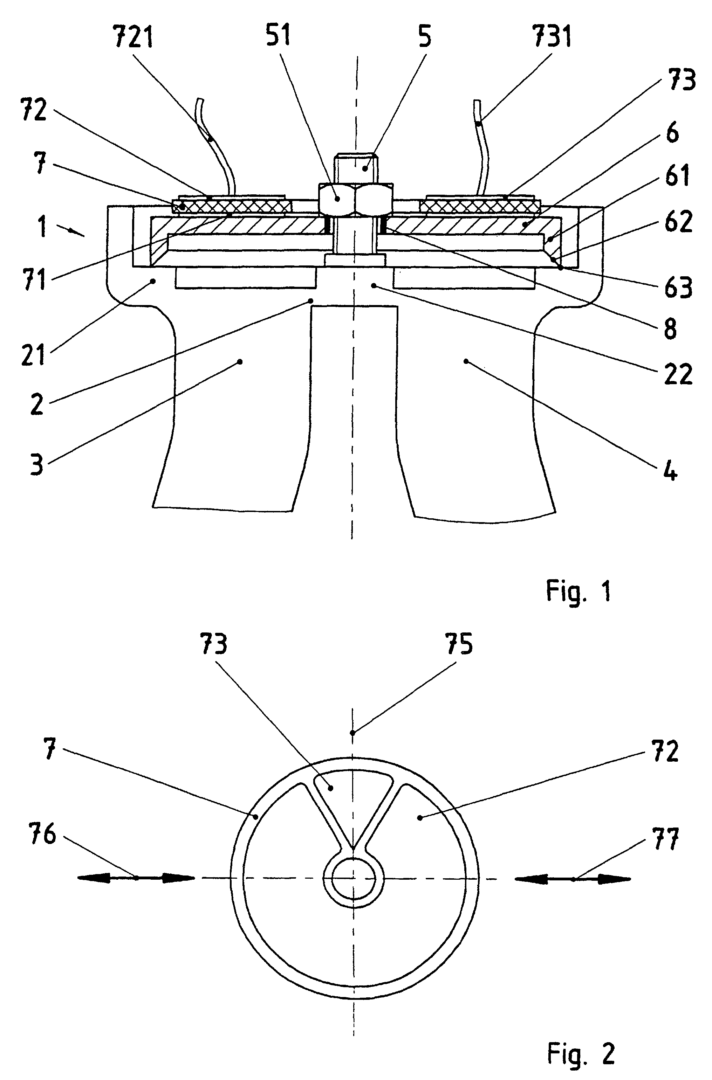

In Fig. 1 sind im Längsschnitt nur Teile einer Vorrichtung dargestellt, die für die Erfindung gegenüber dem Stand der Technik wesentlich sind. Die Vorrichtung weist ein rotationssymmetrisches metallisches Gehäuse 1 auf.
Dieses ist in einer Öffnung eines nicht dargestellten Behälters befestigt, indem z.B. an das Gehäuse 1 ein Außengewinde angeformt ist, das in den Behälter einzuschrauben ist. Das Gehäuse 1 schließt auf der behälter-zugewandten Seite mit einer ersten Membran 2 ab, mit der zwei in den Behälter ragende Schwingstäbe 3, 4 jeweils endseitig und voneinander beabstandet fest verbunden sind. Bevorzugt bestehen Membran 2, Schwingstäbe 3, 4 und zumindest ein direkt an die Membran 2 angrenzender Abschnitt des Gehäuses 1 aus einem einzigen Gußteil. Ein weiterer in der Figur nicht dargestellter Gehäuseabschnitt ist mit dem übrigen Gehäuse 1 fest verbunden, z.B. verschweißt.

Die Membran 2 weist an ihrem äußeren Rand auf der dem Gehäuseinneren zugewandten Seite einen Absatzring 21 auf. Dadurch ist die Steifigkeit der Membran 2 erhöht, und sie ist fest eingespannt. Es wird folglich nur sehr wenig Schwingungsenergie auf das Gehäuse 1 übertragen.

Im Inneren des Gehäuses 1 befindet sich eine zweite, z.B. kreisringscheiben-förmige, Membran 6, die parallel zu der ersten Membran 2 angeordnet und an deren Rand ein rohrförmiges Kopplungsstück 61 bündig angeformt ist. Das freie Ende 62 des Kopplungsstücks 61 ist zum Rohrinneren hin abgeschrägt, so daß der Kopplungsring 61 lediglich mit einer äußeren ringförmigen Kante 63 auf der ersten Membran 2 aufliegt.

Die zweite Membran 6 und das Kopplungsstück 61 bestehen aus elektrisch leitendem Material, z.B. einem geeigneten Metall, wie z.B. nicht-rostendem Stahl.

Auf der zweiten Membran 6 ist ein ringscheiben-förmiges piezoelektrisches Element 7 fixiert, z.B. angeklebt oder angelötet. Dieses weist auf der membran-zugewandten Seite eine ringscheiben-förmige erste Elektrode 71 auf, die es mit der zweiten Membran 6 und über das Kopplungsstück 61 sowie die erste Membran 2 mit dem Gehäuse 1 elektrisch verbindet. Auf der membran-abgewandten Ringscheibenfläche des piezoelektrischen Elements 7 befinden sich eine zweite Elektrode 72, die über eine Zuleitung 721 mit einer nicht dargestellten Wechselspannungsquelle zu verbinden ist, und eine dritte Elektrode 73, die über eine weitere Leitung 731 mit einer nicht dargestellten Auswerte-Elektronik zu verbinden ist.

Fig. 2 zeigt eine Draufsicht auf die membran-abgewandte Seite des piezoelektrischen Elements 7. Die zweite Elektrode 72 weist die Form eines überstumpfwinkligen Kreisringsegments auf. Die dritte Elektrode 73 hat die Form eines spitzwinkligen Kreissegments. Zwischen den Elektroden 72, 73 besteht kein Kontakt. Die Symmetrieachse 75 der Anordnung der beiden Elektroden 72, 73 verläuft senkrecht zur Auslenkungsrichtung der Schwingstäbe, die durch die Pfeile 76, 77 angedeutet ist.

Im Zentrum der ersten Membran 2 ist eine in das GehäuseInnere ragende Spannschraube 5 befestigt. In dem in Fig. 1 gezeigten Ausührungsbeispiel ist die Spannschraube 5 auf einen im Zentrum der Membran 2 angeformten kreisscheiben-förmigen Absatz 22 geschweißt. Dieser schützt die dünne und daher empfindliche Membran 2 während des Schweißvorganges. Die Spannschraube 5 durchdringt die zweite Membran 6 und das piezoelektrische Element 7. Diese hat keinen mechanischen Kontakt zum Gehäuse 1. Durch eine Mutter 51, die auf die Spannschraube 5 gegen die zweite Membran 6 geschraubt ist, ist die erste Membran 2 leicht vorgespannt und die Kante 63 des Kopplungsstücks 61 schneidet in den Absatzring 21 der Membran 2 ein. Die Mutter 51 hat keinen elektrischen Kontakt zu den beiden Elektroden 72, 73. In der zentralen Öffnung des piezoelektrischen Elements 7 befindet sich ein Isolationsring 8. Dies ist z.B. ein in die Öffnung eingeklebter Kunststoffring.

Die Funktion der Mutter 51 kann auch durch ein im Zentrum der zweiten Membran 6 angebrachtes Innengewinde erfüllt werden, mit dem die Membran 6 auf die Spannschraube 5 geschraubt ist.

Das piezoelektrische Element 7 weist eine Polarisation in axialer Richtung auf. Es ändert, für sich genommen, in Abhängigkeit von einer in axialer Richtung anliegenden Spannungdifferenz seine Dicke. Liegt eine Wechselspannung an, so oszilliert die Dicke. Nimmt die Dicke zu, so nimmt der Durchmesser des piezoelektrischen Elementes 7 ab, nimmt die Dicke ab, so vergrößert sich der Durchmesser entsprechend.

Aufgrund dieses Schwingungsverhaltens des piezoelektrischen Elements 7 bewirkt eine Spannungsdifferenz im in die Vorrichtung eingebauten Zustand eine Durchbiegung des aus ihm und der zweiten Membran 6 gebildeten Verbundelements, wobei die Größe der Befestigungsfläche zwischen dem piezoelektrischen Element 7 und der zweiten Membran 6 konstant bleibt.

Liegt eine Spannungsdifferenz an, die beim piezoelektrischen Element 7, für sich alleine genommen, einen vergrößerten Durchmesser bewirkt, so liegt das Zentrum der Durchbiegung, d.h. mindestens ein Schnittpunkt von Senkrechten auf die Befestigungsfläche, auf der membran-zugewandten Seite des piezoelektrischen Elements 7. Liegt eine Spannungsdifferenz an, die beim piezoelektrischen Element 7, für sich alleine genommen, einen verringerten Durchmesser bewirkt, so liegt das Zentrum der Druchbiegung auf dessen membran-abgewandter Seite.

Wird an das piezoelektrische Element 7 eine Wechselspannung angelegt, so führt das Verbundelement Biegeschwingungen aus, deren Schwingungsbauch sich in dessen Zentrum befindet. Diese Biegeschwingung wird durch die Spannschraube 5 und den Kopplungsring 61 auf die erste Membran 2 übertragen. Beide Membranen 2, 6 führen gleichphasige Schwingungen aus.

Die Schwingungsenergie wird direkt zur Erzeugung der gewünschten Schwingungsform, nämlich einer Biegeschwingung, genutzt. Es genügt ein einziges piezoelektrisches Element, um die Schwingungen zu erzeugen.

Die an der ersten Membran 2 fixierten Schwingstäbe 3, 4 führen aufgrund der Biegeschwingungen der Membran 2 gegensinnige Schwingungen quer zu ihrer Längsachse aus. Infolge dieser Gegensinnigkeit heben sich die von jedem Schwingstab auf die Membran 2 ausgeübten Wechselkräfte auf. Dadurch ist die mechanische Beanspruchung der Einspannung gering, und es wird keine Schwingungsenergie auf das Gehäuse 1 übertragen.

Die Vorrichtung ist im übrigen gegen ein unsachgemäßes Zusammendrücken der Schwingstäbe 3, 4 sehr unempfindlich. Es entstehen keine zusätzlichen mechanischen Spannungen an der Befestigungsfläche zwischen dem piezoelektrischen Element 7 und der zweiten Membran 6, da der Kopplungsring 61 auf der ersten Membran 2 lediglich aufliegt.

Die Montage der Vorrichtung ist sehr einfach, da die zweite Membran 6 lediglich auf die Spannschraube 5 gesteckt und die Mutter 51 angeschraubt werden muß.

Weiterhin kann das Verbundelement jederzeit leicht ausgewechselt werden.

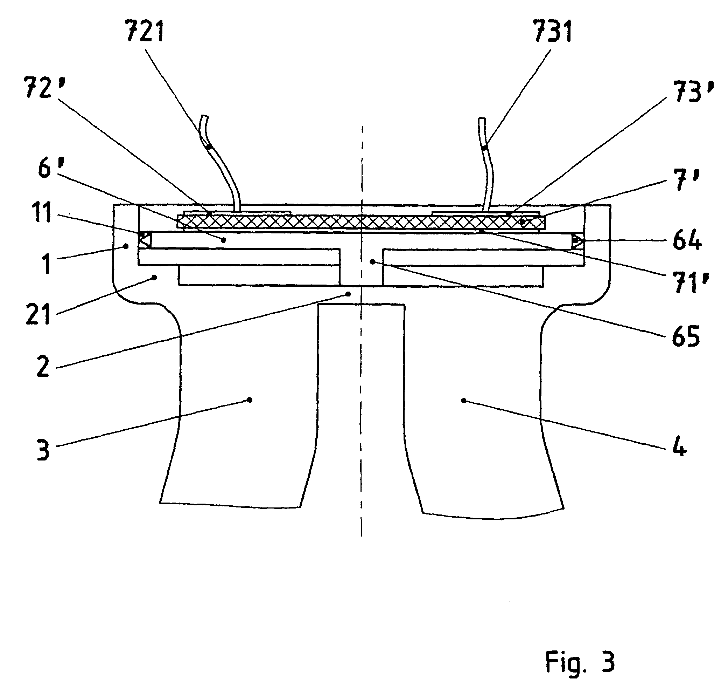

In Fig. 3 sind im Längsschnitt die wesentlichen Teile einer anderen Vorrichtung dargestellt. Diese unterscheidet sich von der in Fig. 1 dargestellten Variante lediglich durch die Befestigungsmittel, mit denen die zweite Membran auf der ersten Membran fixiert ist.

Im Zentrum einer kreisscheiben-förmigen zweiten Membran 6' ist auf der der ersten Membran 2 zugewandten Seite ein zylindrischer Stempel 65 angeformt. Die zweite Membran 6' weist ein Außengewinde 64 auf, das in ein Innengewinde 11 des Gehäuses 1 geschraubt ist, wobei die Membran 6' soweit in das Gehäuse 1 eingeschraubt ist, daß die erste Membran 2 leicht vorgespannt ist.

In diesem Ausführungsbeispiel ist ein scheibenförmiges piezoelektrisches Element 7' verwendet. Scheibenförmige piezoelektrische Elemente 7' sind kostengünstiger und geringfügig robuster als ringscheiben-förmige. Statt der ringscheiben-förmigen bzw. kreisringsegment-förmigen Elektroden 71, 72 des Ausführungsbeispiels von Fig. 1 sind hier scheiben-förmige bzw. kreissegment-förmige Elektroden 71', 72' verwendet.
Die bei dem in Fig. 1 dargestellten Ausführungsbeispiel erforderliche Isolation 8 des dortigen piezoelektrischen Elements 7 und der Elektroden 72, 73 gegen die Spannschraube 5 entfällt.

Die Form der erzeugten Schwingung ist identisch mit der bei der Vorrichtung von Fig. 1. Übertragen werden die Schwingungen jedoch allein durch den Stempel 65. Die Membran 6 ist durch die Schraubverbindung fest in das Gehäuse 1 eingespannt, so daß nur sehr wenig Schwingungsenergie von dem Gehäuse 1 aufgenommen wird. Hierzu weist die Gehäusewand eine sehr viel höhere mechanische Steifigkeit als die Membran 6 auf. Unterstützt wird die Entkopplung der Schwingung vom Gehäuse zusätzlich durch den an der Membran 2 angeformten Absatzring 21.

## Patentansprüche

1. Vorrichtung zur Feststellung und/oder Überwachung eines vorbestimmten Füllstandes in einem Behälter, welche Vorrichtung umfaßt:
- ein Gehäuse (1),
- zwei Schwingstäbe (3, 4), welche in einen Behälter ragen können,
- eine an ihrem Rand fest in das Gehäuse (1) eingespannte erste Membran (2), an der die Schwingstäbe (3,4) voneinander beabstandet befestigt sind,
- eine parallel zu der ersten Membran (2) im Inneren des Gehäuses (1) angeordnete zweite Membran (6, 6'),
- am Rand und im Zentrum der zweiten Membran (6, 6') angeordnete Befestigungsmittel, über die die . zweite Membran (6, 6') mit der ersten Membran (2) direkt mechanisch gekoppelt ist,
- ein einziges auf der zweiten Membran (6, 6') angeordnetes, scheiben- oder ringscheibenförmiges piezoelektrisches Element (7, 7') zur Anregung der zweiten Membran (6, 6') zu Biegeschwingungen und zum Empfangen und Umwandeln von deren Schwingungen in ein elektrisches Ausgangssignal,
-- wobei die Schwingungen der zweiten Membran (6, 6') über die Befestigungsmittel direkt auf die erste Membran (2) und von dieser auf die Schwingstäbe (3, 4) derart übertragen werden, daß die Schwingstäbe (3, 4) gegensinnige Schwingungen quer zu ihrer Längsachse ausführen.

2. Vorrichtung nach Anspruch 1, bei der die Befestigungsmittel ein an die zweite Membran (6) angeformter, auf der ersten Membran (2) aufliegender Kopplungsring (61) und eine im Zentrum der ersten Membran (2) befestigte, in das Innere des Gehäuses (1) ragende, die zweite Membran (6) und das piezoelektrische Element (7) durchdringende Spannschraube (5) sind, mittels der und einer Mutter (51) die zweite Membran (6) auf der ersten Membran (2) fixiert ist.

3. Vorrichtung nach Anspruch 1, bei der die Befestigungsmittel ein an die zweite Membran (6) angeformter, auf der ersten Membran (2) aufliegender Kopplungsring (61) und eine im Zentrum der ersten Membran (2) befestigte, in das Innere des Gehäuses (1) ragende, die zweite Membran (6) und das piezoelektrische Element (7) durchdringende Spannschraube (5) sind und bei der die zweite Membran (6) in ihrem Zentrum ein Innengewinde aufweist, das mit der Spannschraube (5) verschraubt ist.

4. Vorrichtung nach Anspruch 1, bei der die Befestigungsmittel ein an der zweiten Membran (6') befindliches, in ein Innengewinde (11) des Gehäuses (1) geschraubtes Außengewinde (64) und ein im Zentrum der zweiten Membran (6') auf der der ersten Membran (2) zugewandten Seite angeformter Stempel (65) sind und bei der die zweite Membran (6') soweit in das Gehäuse (1) eingeschraubt ist, daß die erste Membran (2) vorgespannt ist.

5. Vorrichtung nach Anspruch 1, bei der das piezoelektrische Element (7, 7') drei Elektroden (71, 71', 72, 72', 73) aufweist, von denen
- eine mit dem Gehäuse (1) verbundene erste Elektrode (71, 71') auf einer ersten Kreis- oder Kreisringfläche des piezoelektrischen Elements (7, 7'),
- eine mit einer Wechselspannungsquelle verbundene zweite Elektrode (72, 72') auf einer zweiten Kreis- oder Kreisringfläche des piezoelektrischen Elements (7, 7') und
- eine der Abnahme der Ausgangssignals dienende dritte Elektrode (73) auf der zweiten Kreis- oder Kreisringfläche des piezoelektrischen Elements (7, 7')angeordnet ist.

## Claims

1. A device for determining and/or monitoring a pre-determined filling level in a container, which device comprises,
- a housing (1),
- two oscillating rods (3, 4) which can project into a container,
- a first diaphragm (2) which is stretched at its edge in the housing (1) in a fixed manner and on which the oscillating rods (3, 4) are fastened at a distance from each other,
- a second diaphragm (6, 6') arranged parallel to the first diaphragm (2) in the interior of the housing (1),
- fastening means which are arranged on the edge and in the centre of the second diaphragm (6, 6') and by way of which the second diaphragm (6, 6') is directly coupled mechanically to the first diaphragm (2),
- a single disc-shaped or annular piezoelectric element (7, 7') arranged on the second diaphragm (6, 6') for causing the second diaphragm (6, 6') to perform bending oscillations and for receiving and converting their oscillations into an electrical output signal,
- the oscillations of the second diaphragm (6, 6') being transmitted by way of the fastening means directly to the first diaphragm (2) and from the latter to the oscillating rods (3, 4) in such a way that the oscillating rods (3, 4) perform oscillations in opposite directions transversely to their longitudinal axis.

2. A device according to Claim 1, in which the fastening means are a coupling ring (61), integrally formed on the second diaphragm (6) and resting on the first diaphragm (2), and a clamping bolt (5), which is fastened in the centre of the first diaphragm (2) and projects into the interior of the housing (1) and which passes through the second diaphragm (6) and the piezoelectric element (7) and by means of which clamping bolt (5) and a nut (51) the second diaphragm (6) is fixed on the first diaphragm (2).

3. A device according to Claim 1, in which the fastening means are a coupling ring (61), integrally formed on the second diaphragm (6) and resting on the first diaphragm (2), and a clamping bolt (5), which is fastened in the centre of the first diaphragm (2) and projects into the interior of the housing (1) and which passes through the second diaphragm (6) and the piezoelectric element (7), and in which [device] the second diaphragm (6) is provided in its centre with an internal thread which is screwed to the clamping bolt (5).

4. A device according to Claim 1, in which the fastening means are an external thread (64), provided on the second diaphragm (6') and screwed into an internal thread (11) in the housing (1) and a stamp (65) integrally formed in the centre of the second diaphragm (6') and on the side facing the first diaphragm (2), and in which [device] the second diaphragm (6') is screwed so far into the housing (1) that the first diaphragm (2) is pretensioned.

5. A device according to Claim 1, in which the piezoelectric element (7, 7') comprises three electrodes (71, 71', 72, 72', 73), of which
- a first electrode (71, 71') connected to the housing (1) is arranged on a first circular or annular face of the piezoelectric element (7, 7'),
- a second electrode (72, 72') connected to an alternating-current voltage source is arranged on a second circular or annular face of the piezoelectric element (7, 7'), and
- a third electrode (73) used for taking off the output signal is arranged on the second circular or annular face of the piezoelectric element (7, 7').

## Revendications

1. Dispositif destiné à détecter et/ou surveiller un niveau déterminé dans un réservoir, lequel dispositif comprend :
- un boîtier (1),
- deux tiges vibratoires (3, 4), qui peuvent s'engager dans un réservoir,
- une première membrane (2), qui est tendue fortement par son bord dans le boîtier (1) et contre laquelle les tiges vibratoires (3, 4) sont fixées à une distance donnée l'une de l'autre,
- une deuxième membrane (6, 6'), disposée parallèlement à la première membrane (2) à l'intérieur du boîtier (1),
- des moyens de fixation, qui sont disposés contre le bord et au centre de la deuxième membrane (6, 6') et par lesquels la deuxième membrane (6, 6') est couplée directement par voie mécanique avec la première membrane (2),
- un seul élément piézoélectrique (7, 7') en forme de disque ou de disque annulaire, qui est disposé sur la deuxième membrane (6, 6') et est destiné à exciter la deuxième membrane (6, 6') en vue de générer des vibrations de flexion et destiné à capter et convertir les vibrations de celle-ci en un signal de sortie électrique,
-- dans lequel les vibrations de la deuxième membrane (6, 6') sont transmises par l'intermédiaire des moyens de fixation directement sur la première membrane (2) et à partir de celle-ci sur les tiges vibratoires (3,4), de telle sorte que les tiges vibratoires (3, 4) effectuent des vibrations en sens inverse transversales à leur axe longitudinal.

2. Dispositif selon la revendication 1, dans lequel les moyens de fixation sont formés par une bague de couplage (61) formée contre la deuxième membrane (6) et en appui sur la première membrane (2) et par une vis de serrage (5) fixée au centre de la première membrane (2), s'engageant à l'intérieur du boîtier (1) et passant à travers la deuxième membrane (6) et l'élément piézoélectrique (7), au moyen de laquelle et d'un écrou (51) la deuxième membrane (6) est fixée sur la première membrane (2).

3. Dispositif selon la revendication 1, dans lequel les moyens de fixation sont formés par une bague de couplage (61) formée contre la deuxième membrane (6) et en appui sur la première membrane (2) et par une vis de serrage (5) fixée au centre de la première membrane (2), s'engageant à l'intérieur du boîtier (1) et passant à travers la deuxième membrane (6) et l'élément piézoélectrique (7) et dans lequel la deuxième membrane (6) est munie en son centre d'un taraudage, dans lequel est vissée la vis de serrage (5).

4. Dispositif selon la revendication 1, dans lequel les moyens de fixation sont formés par un filetage (64), réalisé sur la deuxième membrane (6') et vissé dans un taraudage (11) du boîtier (1), et par un poinçon (65), formé au centre de la deuxième membrane (6') sur la face orientée vers la première membrane (2), et dans lequel la deuxième membrane (6') est vissée dans le boîtier (1) jusqu'à une profondeur telle que la première membrane (2) est précontrainte.

5. Dispositif selon la revendication 1, dans lequel l'élément piézoélectrique (7, 7') comporte trois électrodes (71, 71', 72, 72', 73), parmi lesquelles
- une première électrode (71, 71'), assemblée avec le boîtier (1), est disposée sur une première surface circulaire ou annulaire de l'élément piézoélectrique (7, 7'),
- une deuxième électrode (72, 72'), reliée à une source de tension alternative, est disposée sur une deuxième surface circulaire ou annulaire de l'élément piézoélectrique (7, 7'),
- une troisième électrode (73), utilisée pour capter le signal de sortie, est disposée sur la deuxième surface circulaire ou annulaire de l'élément piézoélectrique (7, 7').
